(19) Europäisches Patentamt
European Patent Office
Office européen des brevets

(11) Publication number: **0 267 977**
**A1**

(12) **EUROPEAN PATENT APPLICATION**

(21) Application number: 86115933.3

(51) Int. Cl.[4]: C08G 18/38 , C08G 18/16

(22) Date of filing: 17.11.86

(43) Date of publication of application: 25.05.88 Bulletin 88/21

(84) Designated Contracting States: AT BE CH DE FR GB IT LI LU NL SE

(71) Applicant: Ashland Oil, Inc.
1000 Ashland Drive
Russell Kentucky 41169(US)

(72) Inventor: Goel, Anil B.
373 Eastwort Court
Worthington Ohio 43085(US)

(74) Representative: Vossius & Partner
Siebertstrasse 4 P.O. Box 86 07 67
D-8000 München 86(DE)

(54) **Catalytic copolymerization of bicyclic amide acetals and polyisocanates.**

(57) An improved process for the copolymerization of a bicyclic amide acetal with a polyisocyanate comprising carrying out the copolymerization reaction in the presence of a catalyst selected from the group consisting of tertiary amines, organo tin compounds and iron and nickel salts at a temperature in the range of from about 10°C. to 200°C. is described.

EP 0 267 977 A1

## CATALYTIC COPOLYMERIZATION OF BICYCLIC AMIDE ACETALS AND POLYISOCYANATES

This invention relates to an improved process for the copolymerization of bicyclic amide acetals and polyisocyanates and more particularly pertains to a catalytic process for the copolymerization of bicyclic amide acetals and polyisocyanates employing organotin and tertiary amine catalysts.

The reaction of bicyclic amide acetals with di-or poly-isocyanates at higher temperatures to give brittle polymers has been described in German Patent No. 3,235,933. The use of moisture to improve the copolymerization of bicyclic amide acetals and polyisocyanates has been disclosed in copending U.S. Patent Application Serial No. 658,969, Filed on 10/9/84.

I have discovered that the rate of copolymerization of bicyclic amide acetals and polyisocyanates can be improved dramatically by the use of a specified catalyst in the copolymerization process and that the resulting polymers have much improved physical properties when compared with the polymers which result from the prior art non-catalytic process.

Although bicyclic amide acetals have previously been shown to react with isocyanates, these reactions generally are slow and require relatively high reaction temperatures. There has been no previously described use of any catalyst in the copolymerization of bicyclic amide acetals with polyisocyanates. I have discovered that the use of tertiary amines and/or organotin catalysts in the copolymerization of bicyclic amide acetals and polyisocyanates results in significant rate improvement yielding polymers of much improved properties and that the process can be carried out at relatively low temperatures (from about 10°C. to about 200°C.) thus making the process more suitable for many applications such as in the reaction injection molding (RIM) process.

The bicyclic amide acetals useful in the process of this invention are those conforming to Formulas I, II or III.

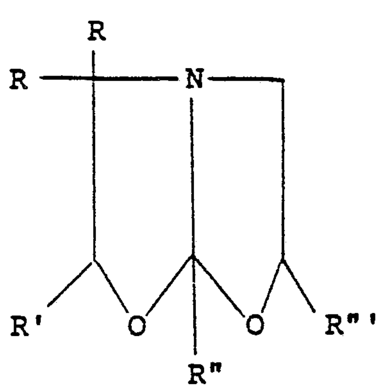
I

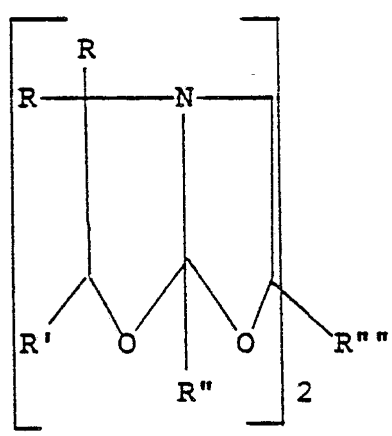
II

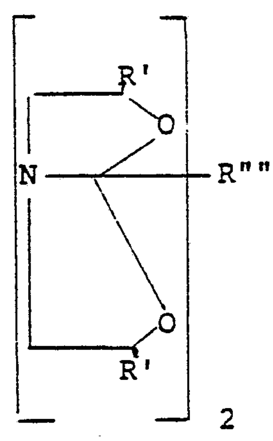
III

wherein R, R′ and R‴ independently represent hydrogen, an alkyl group having from 1 to 15 carbon atoms, an aryl group having from 6 to 12 carbon atoms, an alkyl ether group having from 1 to 20 carbon atoms or an aryl ether group having from 6 to 20 carbon atoms; R″ represents an alkyl group having from 1 to 20 carbon atoms or an alkaryl group having from 7 to 20 carbon atoms; and R⁗ represents an alkylene group having from 1 to 20 carbon atoms, an alkylene group having from 7 to 20 carbon atoms, an alkylene ether group having from 1 to 20 carbon atoms or an arylene ether group having from 6 to 20 carbon atoms.

The polyisocyanates useful in this invention include organic isocyanates having at least two isocyanate groups per molecule. The polyisocyanates can be of low, high or intermediate molecular weight and can be any of a wide variety or organic polyisocyanates including ethylene diisocyanate, trimethylene diisocyanate, dodecamethylene diisocyanate, hexamethylene diisocyanate, hexamethylene diisocyanate trimer, tetraethylene diisocyanate, pentamethylene diisocyanate, propylene-1,2-diisocyanate, 2,3-dimethyl tetramethylene diisocyanate, 1,4-diisocyanato cyclohexane, cyclopentene-1,3-diisocyanate, p-phenylene diisocyanate, 1-methyl phenylene-2,4-diisocyanate, naphthalene-1,4-diisocyanate, toluene diisocyanate, diphenyl-4,-4′diisocyanate, benzene-1,2,4-triisocyanate, xylene-1,4-diisocyanate, xylylene-1,3-diisocyanate, 4,4′-diphenylene methane diisocyanate, 4,4′-diphenylene propane diisocyanate, 1,2,3,4-tetraisocyanato butane, butane-1,2,3-triisocyanate, polymethylene polyphenyl isocyanate, and other polyisocyanates having an isocyanate functionality of at least two more fully disclosed in U.S. Patent Numbers 3,350,362 and 3,382,215. Polyisocyanates which are polymeric in nature including isocyanate prepolymers of all types are included in this invention.

The bicyclic amide acetal group is considered to be at least bifunctional towards the isocyanate group. The types of catalysts which are most effective in the process of this invention include organo tin compounds such as tin carboxylates, organotin alkoxides and other organotin salts (such as organotin thiolates, organotin carboxylate and the like), tertiary amines (such as N, N',N''-tris [dimethyl amino propyl] hexa hydrotriazine), and iron and nickel salts (such as iron acetyl acetonate). We have found that the inclusion of small amounts of these catalysts (0.001 to 5% by weight based on bicyclic amide acetal) will result in improvements including significant polymerization rate increase, lower reaction temperatures required, and much improved polymer physical properties without the need for postcuring of the polymer. For instance, the reaction of a bicyclic amide acetal of Formulas I in which R, R' and R''' are hydrogen and R'' is methyl with liquid methylene bis(phenyl isocyanate) at room temperature requires more than 30 minutes to gel and the polymer obtained even after postcuring at 100 degrees C. for 20 minutes has been found to be extremely brittle and no physical properties could be determined because of the brittleness whereas when the same reaction is carried out in the presence of about 0.05% by weight of tin (II) octoate, gelation occurred in less than one minute and the polymer obtained showed notched izod impact strength of 0.4 foot pounds/inch of notch and a heat distortion temperature of about 142 degrees C. Similarly, when a strong tertiary amine catalyst (1,5-diazabicyclo (5.4.0) undec-5-ene (DBU)) which is partially neutralized with 2-ethyl hexanoic acid or phenolics is used, the gelation occurred within 1.5 minutes and the polymer showed notched izod impact strength of 0.8 foot pounds/inch of notch and a heat distortion temperature of 150 degrees C. Another interesting improvement which has been observed is that the products of the process of this invention generally have lower specific gravity when compared to the products of the uncatalyzed process of the prior art.

Thus, because of the improved reaction rate at much lower reaction temperatures and rapid physical properties build up in the product of the process of this invention, the process lends itself to use in the RIM process. Furthermore, the mixture of bicyclic amide acetal and polyisocyanates which have long open time (at least 30 minutes at room temperature shelf life) and they can be cured rapidly by using catalyst, the system now lends itself for use in applications such as vapor phase cured coatings or vapor injection coatings. Use of other additives known to react with isocyanates such as polyols, epoxides, oxazolines, thiols, etc., and inert fillers such as talc, kaoline, glass, carbon, metal powders and the like is within the scope of this invention.

## EXAMPLES 1-17

Several experiments were carried out by mixing a variety of bicyclic amide acetals with liquid methylene bis(phenyl isocyanate) in the absence as well as in the presence of organotin and tertiary amine catalysts. The reactions were carried out in a 20 ml jar. The catalyst (when used was dissolved in the bicyclic amide acetal and the resulting mixture was mixed with the polyisocyanate. The progress of the polymerization reaction was determined by recording the reaction temperature increase of the mixture with time by means of a thermocouple arrangement. The gel time has been considered to be that of the maximum temperature. The reactions, where no or little exotherm was observed, were run for a maximum of 30 minutes. The materials used and the results obtained are given in the following Table. It should be noted that Examples 1, 11, 13 and 15 were conducted for purpose of comparison and are outside the scope of this invention.

In the Table A is a bicyclic amide acetal of Formula I in which R, R' and R''' are hydrogen and R'' is methyl; B is a bicyclic amide acetal of Formula I in which R and R' are hydrogen, R'' is ethyl and R''' is $CH_2OCH_2CH=CH_2$, C is a bicyclic amide acetal of Formula I in which R, R' and R''' are hydrogen and R'' is $CH_2Ph$; D is a bicyclic amide acetal of Formula II in which R and R' are hydrogen; R'' is ethyl and R'''' is $C_4H_8$; T-9 is tin (II) octoate; PC SA 102 is 1,5-diazabicyclo (5.4.0) undec-5-ene partially blocked with ethyl hexanoic acid; PC 41 is N,N',N''-tris(dimethylamino propyl) hexahydro triazine; DBTDL is dibutyl tin dilalurate; Adogen is tetraalkyl ammonium chloride and Fe(AcAc) is iron triacetylacetonate. The polyisocyanate is MDI which is liquid methylene bis(phenyl isocyanate).

TABLE

| Example | Bicyclic Amide Acetal (g) | Polyiso-cyanate MDI (g) | Catalyst (g) | Gel Time (Min.) |
|---|---|---|---|---|
| 1 | A(3.25) | 7.5 | None | 30 |
| 2 | A(3.26) | 7.4 | T-9(0.01) | 0.5 |
| 3 | A(3.26) | 7.5 | PCSA102(0.06) | 1.5 |
| 4 | A(3.22) | 7.5 | PCSA102(0.09) | 1.0 |
| 5 | A(3.27) | 7.5 | PC41(0.05) | 3.5 |
| 6 | A(3.22) | 7.6 | DBTDL(0.01) | 1.2 |
| 7 | A(3.23) | 7.5 | DBTDL(0.01) | 0.7 |
| | | | PC41(0.05) | |
| 8 | A(3.25) | 7.4 | ADOGEN (0.1) | 10 |
| 9 | A(3.2) | 7.4 | $Fe(ACAC)_3$ (0.05) | |
| | | | T-9(0.01) | 0.5 |
| 10 | A(3.27) | 7.6 | T-9(0.01) | 0.8 |
| | | | PC41(0.05) | |
| 11 | B(5.3) | 7.6 | None | 30 |
| 12 | B(5.3) | 7.6 | T-9(0.01) | 1.5 |
| 13 | C(5.1) | 7.6 | None | 30 |
| 14 | C(5.1) | 7.6 | T-9(0.1) | 1.0 |
| 15 | A(3.2) | 9.2 | None | 30 |
| | D(1.0) | | | |
| 16 | A(3.2) | 9.2 | T-9(0.01) | 0.7 |
| | D(1.0) | | | |
| 17 | A(3.2) | 9.2 | DBTDL(0.01) | 1.0 |
| | D(1.0) | | | |

EXAMPLE 18

This experiment which was carried out in the absence of any catalyst is for comparative purposes and is outside the scope of the present invention. The methyl substituted bicyclic amide acetal of Formula I in which R, R′, and R‴ are hydrogen and R″ is methyl (32.5g) was degassed on a rotary evaporator under reduced pressure and was mixed with 78g of degassed liquid methylene bis(phenyl isocyanate). The resulting mixture was poured into a mold prepared from two parallel silicone coated glass plates held apart by 1/8 inch (3,175 mm) spacers. The mold was placed in an oven at 100 degrees C. for 20 minutes. The polymer sheet obtained in this manner was found to be extremely brittle so that no physical testing could be done on it. The specific gravity for this polymer was found to be 1.286.

EXAMPLE 19

The procedure of Example 18 was followed using the same reaction charge. The bicyclic amide acetal (32.5g) was mixed with 0.07g of stannous octoate catalyst and the degassed mixture was mixed rapidly with 78g of liquid MDI was poured into the mold. The polymer was cured in 20 minutes at 100 degrees C. and was found to have a notched izod impact strength (ASTM D-256) of 0.4 foot pounds/inch of notch, an unnotched izod impact strength of 2.5 foot pounds/inch, a heat distortion temperature (ASTM D-648) of 142 degrees C., a flexural strength (ASTM D-790) of 20,947 psi (1,47 $kg/cm^2$) and a flexural modulus of 440,855 psi (30,99 $kg/cm^2$). The specific gravity of the polymer was 1.279.

EXAMPLE 20

The procedure of Example 18 was followed using 33g of bicyclic amide acetal, 0.1g of Polycat SA 102 and 79g of liquid MDI. The polymer was found to have a notched izod impact strength of 0.8 foot pounds/inch of notch, an unnotched izod impact strength of 14 foot pounds/inch and a heat distortion temperature of 149 degrees C. The polymer was also found to have a specific gravity of 1.270.

EXAMPLE 21

This is a comparative example outside the scope of the present invention. The reaction mixture of Example 18 was poured into the heated mold (60 degrees C.) and was left under open atmospheric temperature for 20 minutes. The polymer formed was extremely brittle and no physical properties could be determined.

EXAMPLE 22

The procedure of Example 21 was followed using 34.3g of the bicyclic amide acetal of Formula 1 in which R″ is methyl and R, R′ and R‴ are hydrogen, 0.04g of stannous octoate catalyst and 85g of liquid MDI. A rapid polymerization occurred within 30 seconds of the time the mixture was poured into the mold. The resulting polymer was found to have a notched izod impact strength of 0.3 foot pounds/inch of notch, a heat distortion temperature of 140 degrees C., a flexural strength of 12,056 psi (0,85 kg/cm$^2$) and a flexural modulus of 439,666 psi (30,91 kg/cm$^2$).

EXAMPLE 23

The procedure of Example 21 was followed using 34.2g of the bicyclic amide acetal, 0.12g of Polycat SA 102 and 83.3g of liquid MDI The polymer was found to have a notched izod impact strength of 0.8 foot pounds/inch of notch, an unnotched izod impact strength of 7 foot pounds/inch, a heat distortion temperature of 148 degrees C. a flexural strength of 25,126 psi (1,77 kg/cm$^2$) and a flexural modulus of 391,084 psi (27,49 kg/cm$^2$).

EXAMPLE 24

An isocyanate prepolymer was prepared by reacting 90g of liquid MDI, 10g of liquid diglycidyl ether of Bisphenol-A (epoxy equivalent weight of 185) and 10g of carboxylic acid group terminated acrylonitrilebutadiene copolymer (molecular weight of 5000 containing 18% acrylonitrile) at 90-100 degrees C. for three hours. The procedure of Example 18 was followed using 34g of the bicyclic amide acetal, 0.1g of dibutyl tin dilaurate catalyst and 86g of the above isocyanate prepolymer. The polymer was cured for 43 minutes at 100 degrees C. and was found to have a notched izod impact strength of 0.85 foot pounds/inch of notch, an unnotched izod impact strength of 8.5 foot pounds/inch, a heat distortion temperature of 118 degrees C., a flexural strength of 19,827 psi (1,39 kg/cm$^2$) and a flexural modulus of 424,718 psi (29,86 kg/cm$^2$).

EXAMPLE 25

The procedure of Example 18 was followed using 34g of the bicyclic amide acetal, 0.1g of N,N′,N″-tris-(dimethyl amino propyl) hexahydro triazine, 0.04g of dibutylin dilaurate and 80g of liquid MDI. The resulting polymer was found to have a notched izod impact strength of 0.3 ft. lb/in of notch, Flexural strength of 14,828 psi (1,04 kg/cm$^2$) and a flexural modulus of 583,559 psi (41,02 kg/cm$^2$).

## Claims

1. A process for copolymerizing a bicyclic amide acetal with a polyisocyanate comprising carrying out the copolymerization at a temperature in the range of from about 10°C. to about 200°C. in the presence of a catalytic amount of at least one member selected from the group consisting of tertiary amines, organo tin compounds and iron and nickel salts.

2. The process of Claim 1 wherein the bicyclic amide acetal is one having the formula I, II or III

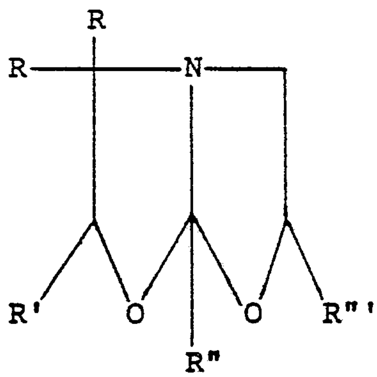
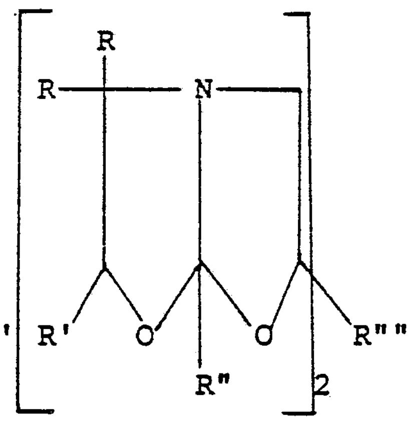
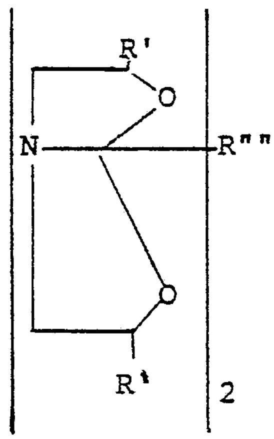

I II III

wherein R, $R'$ and $R''$ independently represent hydrogen, an alkyl grounp having from 1 to 15 carbon atoms, an aryl group having from 6 to 12 carbon atoms, an alkyl ether group having from 1 to 20 carbon atoms or an aryl ether groups having from 6 to 20 carbon atoms; $R''$ represents an alkyl group having from 1 to 20 carbon atoms; or an alkaryl group having from 7 to 20 carbon atoms; and $R''''$ represents an alkylene group having from 1 to 20 carbon atoms, an alkarylene group having from 7 to 20 carbon atoms, an alkylene ether group having from 6 to 20 carbon atoms

3. The processes of Claim 2 wherein the catalyst is present in from 0.001 to 5% by weight based on the weight of the bicyclic amide acetal.

4. The process of Claim 3 wherein the tertiary amine is N,N',N''-tris(dimethyl amino propyl) hexahydrotriazine, the organo tin compound is a tin carboxylate, an organo tin alkoxide or an organotin thiolate and the iron salt is iron acetyl acetonate.

5. The process of Claim 3 wherein the polyisocyanate is one having at least two isocyanate groups per molecule.

6. The process of Claim-5 wherein the bicyclic amide acetal is one of Formula I in which R,$R'$ and $R'''$ are hydrogen and $R''$ is methyl.

7. The process of Claim 5 wherein the bicyclic amide acetal is one of Formula I in which R and $R'$ are hydrogen, $R''$ is ethyl and $R'''$ is $CH_2OCH_2CH_2CH=CH_2$.

8. The process of Claim 5 wherein the bicyclic amide acetal is one of Formula I in which R, $R'$ and $R'''$ are hydrogen and $R''$ is $CH_2Ph$.

9. The process of Claim 5 wherein the bicyclic amide acetal is one of Formula II in which R and $R'$ are hydrogen, $R''$ is ethyl and $R''''$ is $C_4H_8$.

10. The process of Claim 5 wherein the catalyst is tin (II) octoate.

11. The process of Claim 5 wherein the catalyst is N,N',N''-tris-(dimethyl amino propyl) hexahydro triazine.

12. The process of Claim 5 wherein the catalyst is dibutyl tin dilaurate.

13. The process of Claim 5 wherein the catalyst is tetraalkyl ammonium chloride.

14. The process of Claim 5 wherein the catalyst is iron acetyl acetonate.

15. The process of Claim 5 wherein the polyisocyanate is methylene bis(phenyl isocyanate).

16. The process of Claim 6 wherein the catalyst is stannous octoate and the polyisocyanate is methylene bis(phenyl isocyanate).

17. The process of Claim 6 wherein the catalyst is dibutyl tin dilaurate and the polyisocyanate is an isocyanate prepolymer.

18. Catalyst for carrying out the process according to any of Claims 1 to 17 comprising at least one member selected from the group consisting of tertiary amines, organo tin compounds and iron and nickel salts.

European Patent Office

# EUROPEAN SEARCH REPORT

Application number

EP 86 11 5933

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 558 113 (A.B. GOEL) * column 1, line 27 - column 2, line 35; claims 1-19 * --- | 1-18 | C 08 G 18/38<br>C 08 G 18/16 |
| A | EP-A-0 185 157 (ASHLAND OIL, INC.) * claims 1-14; page 4, lines 34-37 * --- | 1-18 | |
| A | US-A-4 374 222 (L.W. MEYER) * claims 1-2; column 6, line 60 - column 7, line 23 * --- | 1 | |
| A | EP-A-0 180 783 (ASHFORD OIL, INC.) * claims 1-11 * --- | 1-18 | **TECHNICAL FIELDS SEARCHED (Int. Cl.4)** |
| A | US-A-4 101 527 (A.L. CUNNINGHAM et al.) * claims 1-2; column 2, lines 54-59 * --- | 1 | C 08 G 18/00 |
| A | J.H. SAUNDERS et al.: "Polyurethanes - Chemistry and Technology", Part I, 1962, Interscience Publischers, New York * page 212 * ----- | 1,18 | |

The present search report has been drawn up for all claims

| Place of search | Date of completion of the search | Examiner |
|---|---|---|
| BERLIN | 26-06-1987 | IDEZ C.G. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document